# EUROPÄISCHE PATENTSCHRIFT

(11) **EP 3 755 976 B1**
(45) Veröffentlichungstag und Bekanntmachung des Hinweises auf die Patenterteilung: **30.03.2022**
(21) Anmeldenummer: 19701827.8
(22) Anmeldetag: 24.01.2019
(51) Int. Cl.: B60K 13/04, B60K 15/03, G01F 23/296, F01N 3/20

(54) **SCHALLFÜHRUNGSEINHEIT UND TANK ZUR SPEICHERUNG FLUIDEN REDUKTIONSMITTELS**
SOUND CONDUCTING UNIT AND TANK FOR STORING FLUID REDUCING AGENT
UNITÉ DE GUIDAGE ACOUSTIQUE ET RÉSERVOIR DESTINÉ À STOCKER UN AGENT RÉDUCTEUR FLUIDE

(30) Priorität: 21.02.2018 DE 102018202596
(43) Veröffentlichungstag der Anmeldung: 30.12.2020
(73) Patentinhaber: Robert Bosch GmbH, 70442 Stuttgart (DE)
(72) Erfinder: HANNEKE, Juergen, 70499 Stuttgart (DE); RUIGROK VAN DE WERVE, Jan, 70184 Stuttgart (DE); FELDMANN, Frank, 71364 Weinstadt (DE)
(86) Internationale Anmeldenummer: PCT/EP2019/051722
(87) Internationale Veröffentlichungsnummer: WO 2019/162031

(56) Entgegenhaltungen:
- CN-A- 102 865 904
- DE-A1- 10 312 102
- DE-A1-102011 086 774
- JP-A- 2014 085 185
- US-A1- 2014 311 239
- US-B2- 9 664 552

## Beschreibung

Die Erfindung betrifft eine Schallführungseinheit und einen Tank zur Speicherung fluiden Reduktionsmittels mit einer solchen Schallführungseinheit. Die Erfindung betrifft auch ein Abgasreduktionssystem mit einem solchen Tank.

### Stand der Technik

Um Stickoxide (NOₓ), die in den Abgasen eines Verbrennungsmotors, insbesondere eines Dieselmotors, enthalten sind, zu reduzieren, wird ein flüssiges Reduktionsmittel, insbesondere eine Harnstoffwasserlösung ("AdBlue"^{®}), in den Abgastrakt des Verbrennungsmotors eingespritzt.

Das Reduktionsmittel wird in einem Tank vorgehalten. Um die Füllhöhe des Reduktionsmittels in dem Tank zu bestimmen, kann eine Ultraschall-Laufzeitstrecke verwendet werden, die es ermöglicht, die Füllhöhe des Reduktionsmittels anhand einer gemessenen Laufzeit eines Ultraschallsignals zur Oberfläche des Reduktionsmittels in dem Tank zu bestimmen.

DE 10 312 102 A1 offenbart eine Vorrichtung zur Messung eines Füllstandes einer Flüssigkeit in einem Behälter mit einem Schallführungskanal und mit wenigstens einem nahe einem Ende des Schallführungskanals angeordneten Ultraschallwandler.

DE 10 2011 086 774 A1 offenbart eine Vorrichtung mit zwei Ultraschallwandlern zur gleichzeitigen Füllstandsbestimmung und Qualitätsbestimmung einer Reduktionsmittellösung.

Harnstoffwasserlösung gefriert bei ca. -11,5 °C. Bei niedrigen Umgebungstemperaturen muss gefrorene Harnstoffwasserlösung aufgetaut werden, um sie zur Abgasreduktion einsetzen zu können.

### Offenbarung der Erfindung:

Es ist eine Aufgabe der Erfindung, ein schnelles Auftauen gefrorenen Fluids, insbesondere gefrorenen Reduktionsmittels, im Tank zu ermöglichen.

Gemäß der Erfindung weist eine Schallführungseinheit für einen Tank, der zur Speicherung eines Fluids, insbesondere fluiden Reduktionsmittels, vorgesehen ist, eine Wandlereinheit, eine Messstreckeneinheit und eine Füllhöhen-Schallmessstrecke auf, die zur Messung der Füllhöhe des Fluids im Tank ausgebildet ist. Die Füllhöhen-Schallmessstrecke umfasst ein im Wesentlichen in vertikaler Richtung verlaufendes Schallführungsrohr und einen an einem unteren Ende des Schallführungsrohrs angeordneten Füllhöhen-Schallwandler. Die Schallführungseinheit weist darüber hinaus wenigstens einen Heizkörper auf, der an oder um wenigsten einen Teilbereich des Schallführungsrohres angeordnet ist. Der Füllhöhen-Schallwandler ist in oder an der Wandlereinheit ausgebildet, und das Schallführungsrohr ist in oder an der Messstreckeneinheit ausgebildet. Die Schallführungseinheit umfasst darüber hinaus eine Qualitäts-Schallmessstreck mit einem an der Qualitäts-Schallmessstreckeangeordneten Qualitäts-Schallwandler und einem an der Qualitäts-Schallmessstrecke angeordneten Hauptreflektor. Der Hauptreflektor ist in horizontaler Richtung zwischen dem Qualitäts-Schallwandler und dem Füllhöhen-Schallwandler angeordnet, so dass das Fluid in der Qualitäts-Schallmessstrecke durch die Abwärme einer zwischen den beiden Schallwandlern in der Wandlereinheit angeordnete Steuerschaltung erwärmt wird.

Ausführungsbeispiele der Erfindung umfassen auch einen Tank zur Speicherung eines Fluids, insbesondere eines fluiden Reduktionsmittels, wie z.B. einer Harnstoffwasserlösung, mit einer erfindungsgemäßen Schallführungseinheit und ein Abgasreduktionssystem mit einem solchen Tank.

Die erfindungsgemäße Nähe des Heizkörpers zum Schallführungsrohr ermöglicht ein schnelles Auftauen des Fluids, insbesondere des Fluids innerhalb des Schallführungsrohrs. Eine erfindungsgemäße Schallführungseinheit ermöglicht darüber hinaus, die Länge des Schallführungsrohres zu variieren, ohne andere Abmessungen Schallführungseinheit verändern zu müssen. Die Schallführungseinheit kann daher mit geringem Aufwand an unterschiedliche Tanks angepasst werden.

Der an der Qualitäts-Schallmessstrecke angeordneten Qualitäts-Schallwandler ermöglicht, dass die Qualitäts-Schallmessstrecke unabhängig von der Füllhöhen-Schallmessstrecke betreibbar ist.

Die erfindungsgemäße Anordnung des Hauptreflektors ermöglicht eine kompakte Bauform der Schallführungseinheit mit hoher Stabilität. Darüber hinaus ermöglicht es eine solche Geometrie, die Qualitäts-Schallmessstrecke durch die Abwärme einer zwischen dem Qualitäts-Schallwandler und dem Schallführungsrohr angeordneten elektrischen oder elektronischen Steuerschaltung zu erwärmen, so dass auf eine zusätzliche Heizung für die Qualitäts-Schallmessstrecke verzichtet werden kann.

In einer Ausführungsform weist der wenigstens eine Heizkörper wenigstens eine Ausnehmung oder Vertiefung auf, und der wenigstens eine Teilbereich des Schallführungsrohres ist in der wenigstens einen Ausnehmung angeordnet. Dies ermöglicht eine gute Wärmeübertragung von dem Heizkörper an das Schallführungsrohr.

In einer Ausführungsform ist das Schallführungsrohr wenigstens teilweise aus einem magnetischen Metall ausgebildet, und in oder an dem Heizkörper ist wenigstens ein (Permanent-)Magnet vorhanden, der es ermöglicht, das Schallführungsrohr durch Magnetkraft an dem Heizkörper zu fixieren. Auf diese Weise kann eine stabile, aber bei Bedarf lösbare, mechanische Verbindung zwischen dem Schallführungsrohr und dem Heizkörper geschaffen werden. Insbesondere kann das Schallführungsrohr durch den Heizkörper fixiert werden. Dadurch können unerwünschte Schwingungen des Schallführungsrohrs, die Streureflektionen des Schalls zur Folge haben könnten, welche das Messergebnis verfälschen würden, auch bei hohen Beschleunigungen vermieden oder zumindest reduziert werden.

Der Heizkörper und auf oder an dem Heizkörper vorhandene elektrische / elektronische Elemente könne von einer schützenden Schicht, beispielsweise einer Kunststoff-Umspritzung oder einem Schrumpfschlauch, umgeben sein, um den Heizkörper und die elektrischen / elektronischen Elemente vor dem Fluid zu schützen.

In einer Ausführungsform ist der Durchmesser (Innendurchmesser) Schallführungsrohrs auf den Durchmesser des Füllhöhen-Schallwandlers abgestimmt, um eine gute Übertragung des Schalls von dem Füllhöhen-Schallwandler in das Schallführungsrohr zu ermöglichen. Das Schallführungsrohr kann insbesondere einen Innendurchmesser von 10 mm bis 18 mm, insbesondere einen Innendurchmesser von 12 mm bis 16 mm, insbesondere einen Innendurchmesser von 14 mm haben. In anderen Anwendungsfällen kann das Schallführungsrohr auch einen Innendurchmesser von weniger als 10 mm haben.

In einer Ausführungsform erstreckt sich die Qualitäts-Schallmessstrecke im Wesentlichen orthogonal zur Füllhöhen-Schallmessstrecke in horizontaler Richtung, insbesondere in der Nähe des Bodens des Tanks, so dass die Füllhöhen-Schallmessstrecke unabhängig von der Füllhöhe des Fluids im Tank einsetzbar ist.

In einer Ausführungsform umfasst die Schallführungseinheit auch einen an der Qualitäts-Schallmessstrecke angeordneten Referenzreflektor. Mit Hilfe eines zusätzlichen Referenzreflektors kann die Qualität des Fluids mit noch höherer Genauigkeit bestimmt werden.

Der Referenzreflektor kann insbesondere zwischen dem Qualitäts-Schallwandler und dem Hauptreflektor angeordnet sein, so dass die Qualität des Fluids anhand von Laufzeitunterschieden zwischen dem Qualitäts-Schallwandler und dem Hauptreflektor und dem Qualitäts-Schallwandler und dem Referenzreflektor bestimmt werden kann. Der Einfluss von Fertigungstoleranzen auf das Messergebnis kann auf diese Weise weiter reduziert werden.

In einer Ausführungsform umfasst die Schallführungseinheit eine Wandlereinheit und eine Messstreckeneinheit, die als separate Bauteile ausgebildet sind. Dabei ist der Füllhöhen-Schallwandler in oder an der Wandlereinheit ausgebildet, und das Schallführungsrohr ist in oder an der Messstreckeneinheit ausgebildet. Eine Kombination aus einer Wandlereinheit und einer Messstreckeneinheit ermöglicht eine einfache Herstellung und Montage der Schallführungseinheit.

In einer Ausführungsform sind die Wandlereinheit und die Messstreckeneinheit durch eine horizontale Relativbewegung oder durch eine vertikale Relativbewegung miteinander verbindbar, um gemeinsam die Schallführungseinheit auszubilden.

In einer Ausführungsform weist wenigstens eine von der Wandlereinheit und der Messstreckeneinheit wenigstens ein Rastelement auf, das es ermöglicht, die beiden Einheiten durch Einrasten des wenigstens einen Rastelements in der anderen Einheit miteinander zu verbinden. Auf diese Weise können die beiden Einheiten einfach und zuverlässig miteinander verbunden werden.

In einer Ausführungsform weist eine von der Wandlereinheit und der Messstreckeneinheit wenigstens eine Führungsnase auf, und die andere von der Wandlereinheit und der Messstreckeneinheit weist wenigstens eine Führungsnut auf, die zur Aufnahme und Führung der wenigstens einen Führungsnase ausgebildet ist. Auf diese Weise können die Wandlereinheit und die Messstreckeneinheit kontrolliert gegeneinander bewegt werden, wobei sich die Führungsnase entlang der Führungsnut bewegt, um das Schallführungsrohr exakt über dem Füllhöhen-Schallwandler zu positionieren. Auf diese Weise kann die Qualität der Messung der Füllhöhe des Fluids im Tank noch weiter verbessert werden.

Die Steifigkeit einer erfindungsgemäßen einteiligen Messstreckeneinheit und deren stabile Befestigung an der Wandlereinheit reduzieren den Einfluss der durch die Montage, insbesondere das Verschweißen und darauf folgende Abkühlen des Tanks, sowie die durch die Fahrdynamik erzeugten Bewegungen der Messstrecken, welche die Messergebnisse verfälschen könnten.

### Kurze Beschreibung der Figuren:

Ausführungsbeispiele der Erfindung werden im Folgenden unter Bezugnahme auf die beigefügten Figuren beschrieben.
Figur 1 zeigt eine schematische Ansicht einer Einrichtung zum Einspritzen eines in einem Tank gespeicherten Fluids in einen Abgasstrang eines Verbrennungsmotors.
Figur 2 zeigt eine seitliche Schnittansicht einer Schallführungseinheit gemäße einem Ausführungsbeispiel der Erfindung.
Figur 3 zeigt eine Draufsicht auf die in der Figur 2 gezeigte Schallführungseinheit.
Figur 4 veranschaulicht die Verbindung der Messstreckeneinheit mit der Wandlereinheit durch Schweißnähte.
Figuren 5 bis 7 veranschaulichen die Verbindung der Messstreckeneinheit mit der Wandlereinheit durch Rastverbindungen.
Figuren 8 und 9 zeigen eine Wandlereinheit und eine Messstreckeneinheit, die gegeneinander verschiebbar miteinander verbunden sind.

### Figurenbeschreibung

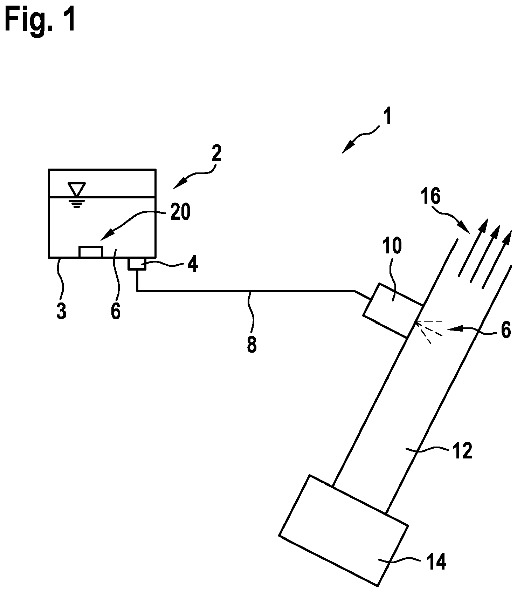

Figur 1 zeigt eine schematische Ansicht eines Abgasreduktionssystems 1 zum Einspritzen eines in einem Tank 2 gespeicherten fluiden Reduktionsmittels 6 (Fluid), insbesondere einer wässrigen Harnstofflösung ("AdBlue"^{®}), in einen Abgasstrang 12 eines Verbrennungsmotors 14, insbesondere eines Dieselmotors 14.

Beim Betrieb des Abgasreduktionssystems 1 wird das Fluid 6 von einem Fördermodul 4, das innerhalb oder außerhalb des Tanks 2 angeordnet sein kann, aus dem Tank 2 entnommen und unter erhöhtem Druck durch eine Druckleitung 8 einer unmittelbar am Abgasstrang 12 positionierten Einspritzvorrichtung 10 zugeführt. Die Einspritzvorrichtung 10 spritzt das Fluid 6 in den Abgasstrang 12 ein, wo es sich mit den durch den Abgasstrang 12 strömenden Abgasen 16 des Verbrennungsmotors 14 vermischt.

An einem Boden 3 des Tanks 2 ist eine Schallführungseinheit 20 angeordnet, die es ermöglicht, die Füllhöhe des Fluids 6 im Tank 2 und/oder die Qualität des Fluids 6 zu bestimmen.

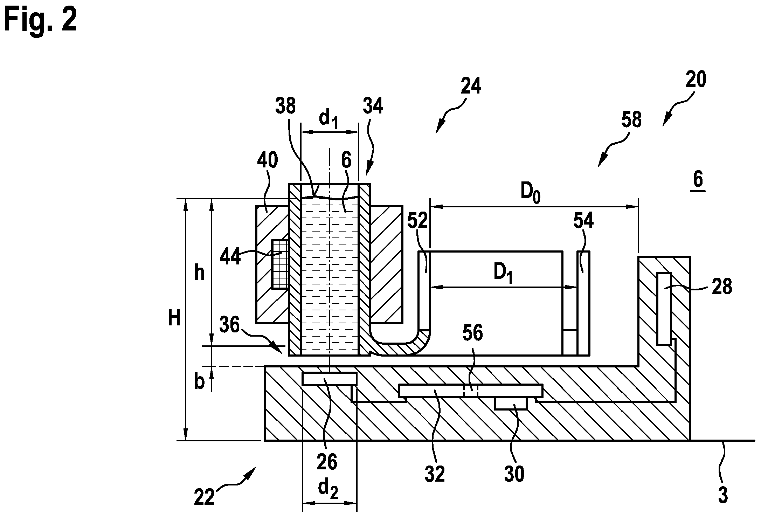

Figur 2 zeigt eine vergrößerte seitliche Schnittansicht der am Boden 3 des Tanks 2 angeordneten Schallführungseinheit 20.

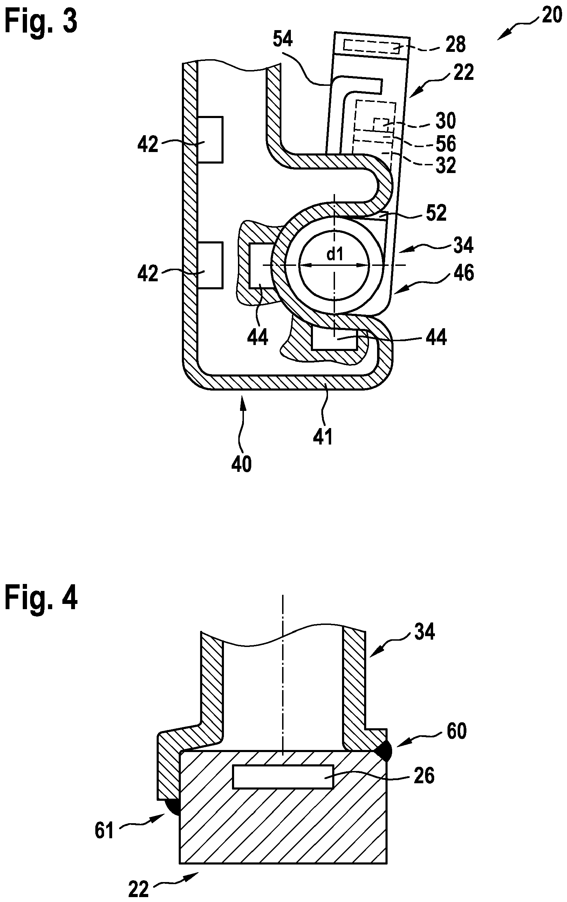

Figur 3 zeigt eine Draufsicht auf die Schallführungseinheit 20.

Die Schallführungseinheit 20 umfasst eine Wandlereinheit 22 und eine Messstreckeneinheit 24.

In der Wandlereinheit 22 sind zwei Schallwandler 26, 28 vorgesehen. Die Schallwandler 26, 28 umfassen einen Füllhöhen-Schallwandler 26, der zur Bestimmung der Füllhöhe H des Fluids 6 im Tank 2 vorgesehen ist, und einen Qualitäts-Schallwandler 28, der zur Bestimmung der Qualität des Fluids 6 vorgesehen ist.

Die beiden Schallwandler 26, 28 können jeweils sowohl als Schallgeber als auch Schallsensor betrieben werden und/oder eine Kombination aus einem Schallgeber und einem Schallsensor umfassen. Die beiden Schallwandler 26, 28 können, müssen aber nicht, baugleich sein und können insbesondere als Piezo-Schallwandler ausgebildet sein.

Die beiden Schallwandler 26, 28 können von einer gemeinsamen elektrischen oder elektronische Steuerschaltung 30 angesteuert werden, die auf einer Leiterplatte 32 ausgebildet ist, die in/an der Wandlereinheit 22 angeordnet ist. In einem alternativen, nicht in den Figuren gezeigten, Ausführungsbeispiel können die beiden Schallwandler 26, 28 jeweils eine eigenen Steuerschaltung 30 aufweisen sein. Dabei können die Steuerschaltungen 30 der beiden Schallwandler 26, 28 auf einer gemeinsamen oder auf separaten Leiterplatten 32 ausgebildet sein.

Der Füllhöhen-Schallwandler 26 ist derart ausgebildet und angeordnet, dass er im Betrieb Schall im Wesentlichen in vertikaler Richtung nach oben, d.h. in Richtung der Oberfläche des im Tank 2 gespeicherten Fluids 6 abgibt.

Der Qualitäts-Schallwandler 28 ist derart ausgebildet und angeordnet, dass er Schall im Wesentlichen in horizontaler Richtung abgibt.

Die Messstreckeneinheit 24 ist oberhalb der Wandlereinheit 22 angeordnet.

Die Messstreckeneinheit 24 umfasst insbesondere ein Schallführungsrohr 34, das sich im Wesentlichen in vertikaler Richtung erstreckt und vorzugsweise unmittelbar über dem Füllhöhen-Schallwandler 26 angeordnet ist, so dass sich der von dem Füllhöhen-Schallwandler 26 abgegebene Schall im Wesentlichen innerhalb des Schallführungsrohrs 34 ausbreitet.

Das Schallführungsrohr 34 ist an seinen beiden Enden offen. Zwischen dem unteren Ende des Schallführungsrohrs 34 und der Wandlereinheit 22 ist ein Spalt 36 ausgebildet, so dass im Tank 2 gespeichertes Fluid 6 in das Schallführungsrohr 34 strömen kann. Der Spalt 36 hat insbesondere eine Spaltbreite b von maximal 3 mm. Die Füllhöhe h des Fluids 6 im Schallführungsrohr 34 ergibt sich daher nach dem Prinzip der kommunizierenden Röhren aus der Füllhöhe H des Fluids 6 im Tank 2.

Um den von dem Füllhöhen-Schallwandler 26 abgegebenen Schall optimal zu nutzen, entspricht der Innendurchmesser d₁ des Schallführungsrohrs 34 im Wesentlichen dem Durchmesser d₂ des Füllhöhen-Schallwandlers 26. Die Durchmesser d₁ und d₂ können insbesondere 10 mm bis 18 mm, insbesondere 12 mm bis 16 mm, insbesondere 14 mm betragen. In anderen Fällen kann der Innendurchmesser d₁ des Schallführungsrohrs auch kleiner als 10 mm sein.

Beim Betrieb des Füllhöhen-Schallwandlers 26 breitet sich der von dem Füllhöhen-Schallwandler 26 abgegebene Schall innerhalb des Fluids 6 im Schallführungsrohr 34 aus und wird an der Oberfläche 38 der Fluidsäule im Schallführungsrohr 34 reflektiert. Der reflektierte Schall wird von dem Füllhöhen-Schallwandler 26 detektiert und aus der Laufzeit des Schallsignals zwischen dem Füllhöhen-Schallwandler 26 und der Oberfläche 38 kann aufgrund der bekannten Schallgeschwindigkeit im Fluid 6 die Füllhöhe h des Fluids 6 im Schallführungsrohr 34 und damit auch die Füllhöhe H des Fluids 6 im Tank 2 bestimmt werden.

Das Schallführungsrohr 40 ist wenigstens teilweise von einem Heizkörper 40 umgeben.

Der Heizkörper 40 weist insbesondere eine im Wesentlichen in vertikaler Richtung verlaufende Ausnehmung oder Vertiefung 46 auf, und das Schallführungsrohr 40 ist in die Ausnehmung 46 oder Vertiefung eingebracht, insbesondere so, dass wenigstens der halbe Umfang des Schallführungsrohrs 40 den Heizkörper 40 kontaktiert.

Der Heizkörper 40 ist aus einem thermisch gut leitenden Material, z.B. Aluminium, gefertigt und thermisch mit Wärme abgebenden Elementen 42 verbunden. Die Wärme abgebenden Elemente 42 können spezielle Heizelemente, z.B. PTC-Heizelemente, oder elektrische / elektronische Elemente, z.B. einer Steuerschaltung, sein, die im Betrieb die gewünschte Wärme abgeben.

Aufgrund seiner guten thermischen Leitfähigkeit überträgt der Heizkörper 40 die von den Wärme abgebenden Elementen 42 abgegebene Wärme effektiv an das Schallführungsrohr 40, welches die Wärme an das darin befindliche Fluid 6 weitergibt.

Der Heizkörper 40 ermöglicht auch, gefrorenes Medium in Tank 2, das sich außerhalb des Schallführungsrohres 40 befindet, aufzutauen.

Der Heizkörper 40 und die auf oder an dem Heizkörper 40 vorhandenen Wärme abgebenden Elemente 42 könne von einer, in den Figuren nicht gezeigten, Schutzschicht 41, beispielsweise einer Kunststoff-Umspritzung oder einem Schrumpfschlauch, umgeben sein, um den Heizkörper 40 und die Wärme abgebenden Elemente 42 vor dem Fluid 6 zu schützen.

Um eine gute Wärmeübertragung an das Fluid 6 zu ermöglichen, ist auch das Schallführungsrohr 34 aus einem gut Wärme leitenden Material, z.B. Metall, insbesondere Edelstahl, oder einem gut Wärme leitenden Kunststoff gefertigt.

Ist das Schallführungsrohr 34 wenigstens teilweise aus einem magnetischen Metall gefertigt, können an oder in dem Heizkörper 40 Permanentmagnete 44 vorgesehen sein, die es ermöglichen, das Schallführungsrohr 34 durch ihre magnetische Kraft an dem Heizkörper 40 zu fixieren. Auf diese Weise können auch bei großen, auf die Schallführungseinheit 20 einwirkenden Beschleunigungen (g-Kräften) Bewegungen / Schwingungen des Schallführungsrohrs 34, die unerwünschte Streureflektionen des Schalls zur Folge haben würden, vermieden werden.

Die erfindungsgemäße Kombination des Schallführungsrohrs 34 mit einem Heizkörper 40 ermöglicht es, das Fluid 6 im Tank 2 und insbesondere innerhalb des Schallführungsrohrs 34 schnell und effektiv aufzutauen bzw. am Einfrieren zu hindern. Dadurch kann die Füllhöhe H des Fluid 4 im Tank 2 nach der Inbetriebnahme des Abgasreduktionssystems 1 schnell bestimmt werden. Auch steht schnell flüssiges Fluid 6 bereit, das in den Abgasstrang 12 des Verbrennungsmotors 14 eingespritzt werden kann.

Die Messstreckeneinheit 24 umfasst zusätzlich zu dem Schallführungsohr 34 wenigstens einen Reflektor (Hauptreflektor) 52, der es ermöglicht, im Zusammenwirken mit dem Qualitäts-Schallwandler 28 die Qualität des im Tank 2 gespeicherten Fluids 6 zu bestimmen. Da Verunreinigungen des Fluids 6 zu einer Änderung der Schallgeschwindigkeit führen, kann aus der Laufzeit eines Schallsignals entlang einer Messstrecke 58 mit bekannter Länge D₀ auf die Qualität des Fluids 6 geschlossen werden.

Um Messfehler, die auch aus einer Variation der Position der Messstreckeneinheit 24 gegenüber der Wandlereinheit 22 ergeben können, zu vermeiden, weist die Messstreckeneinheit 24 zusätzlich einen Referenzreflektor 54 auf. Die Qualität des Fluids 6 wird aufgrund der Differenz der Laufzeiten zwischen dem Qualitäts-Schallwandler 28 und den beiden Reflektoren 52, 54 bestimmt. Die Distanz D₁ zwischen den beiden Reflektoren 52, 54 ist durch die Geometrie der Messstreckeneinheit 24 fest vorgegeben, so dass die Qualität des Fluids 6 unabhängig von der Position der Messstreckeneinheit 24 gegenüber der Wandlereinheit 22 mit hoher Genauigkeit bestimmt werden kann.

Die beiden Reflektoren 52, 54 sind in horizontaler Richtung zwischen dem Qualitäts-Schallwandler 28 und dem Füllhöhen-Schallwandler 26 angeordnet, so dass das Fluid 6 in der Qualitäts-Schallmessstrecke 58 zusätzlich durch die Abwärme der zwischen dem beiden Schallwandlern 26, 28 in der Wandlereinheit 22 angeordnete Steuerschaltung 30 erwärmt wird.

Dies kann durch eine auf der Leiterplatte 32 der Steuerschaltung 30 ausgebildete Wärmefalle 56 unterstützt werden, welche die von der Steuerschaltung 30 im Betrieb erzeugte Wärme gezielt zur Qualitäts-Schallmessstrecke 58 leitet. Die von der Steuerschaltung 30 erzeugte Wärme wird auf diese Weise effektiv abgeführt, so dass auf zusätzliche Kühlelemente auf der Leiterplatte 32 und eine aktive Temperaturregelung der Steuerschaltung 30 verzichtet werden kann.

Zusätzlich zum Fluid 6 im Schallführungsrohr 34 wird so auch das Fluid 6 in der Qualitäts-Schallmessstrecke 58 schnell erwärmt / aufgetaut, so dass die Qualität des Fluids 6 nach der Inbetriebnahme des Abgasreduktionssystems 1 schnell bestimmt werden kann und auch das Fluid 6 in der Qualitäts-Schallmessstrecke 58 als flüssiges Fluid 6 zur Verfügung steht, um in den Abgasstrang 12 des Verbrennungsmotors 14 eingespritzt zu werden.

Die Messstreckeneinheit 24 kann mit der Wandlereinheit 22 durch Schweißnähte 60, 61 fest verbunden werden. In der Figur 4 sind zwei mögliche Varianten von Schweißnähten 60, 61 gezeigt. Die Verbindung durch Schweißnähte 60, 61 ist insbesondere vorteilhaft, wenn die Schallwandler 26, 28 einen kleinen Durchmesser d₂ haben und/oder hohe Beschleunigungen zu erwarten sind.

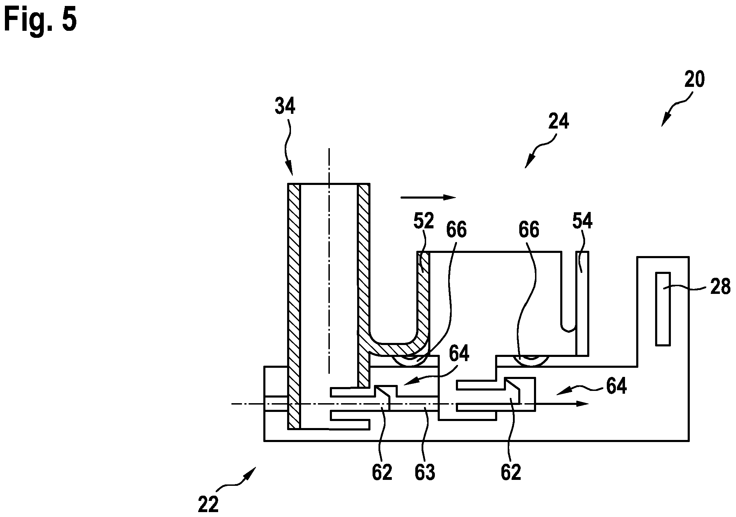

Alternativ können die Messstreckeneinheit 24 und die Wandlereinheit 22 durch Rastverbindungen miteinander verbunden werde, wie sie beispielhaft in den Figuren 5 bis 7 gezeigt sind.

Elastische Rasthaken / Rastnasen 62, die an der Messstreckeneinheit 24 oder der Wandlereinheit 22 ausgebildet sind und die sich beispielsweise in einem Führungskanal 63 bewegen, greifen in korrespondierende Ausnehmungen 64 ein, die an/in der anderen der beiden Einheiten 22, 24 ausgebildet sind.

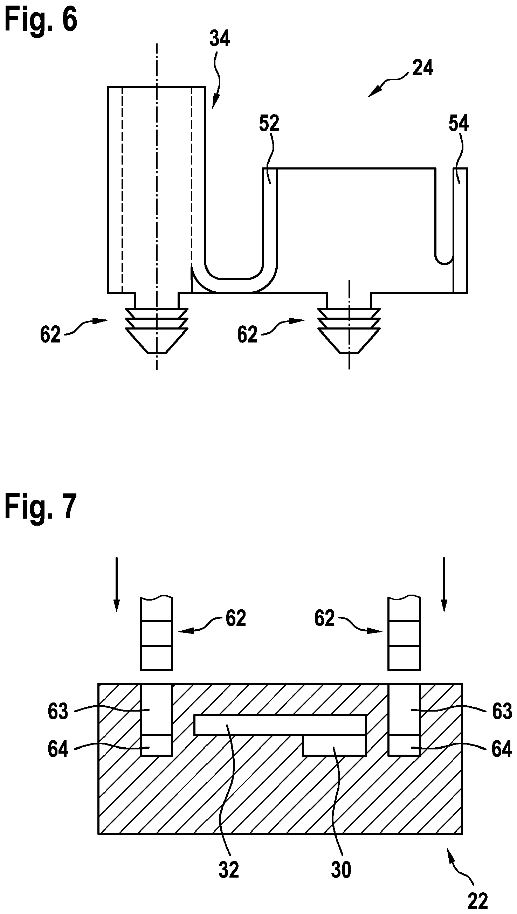

Dabei können die Messstreckeneinheit 24 und die Wandlereinheit 22 entweder durch eine horizontale Bewegung (siehe Figur 5), d.h. eine Bewegung parallel zur Qualitäts-Schallmessstrecke 58, oder durch eine vertikale Bewegung (siehe Figuren 6 und 7), d.h. eine Bewegung parallel zur Füllhöhen-Schallmessstrecke im Schallführungsrohr 34, miteinander verbunden werden.

Zwischen der Messstreckeneinheit 24 und die Wandlereinheit 22, insbesondere an einem Boden der Messstreckeneinheit 24, der der Wandlereinheit 22 zugewandt ist, können elastische Elemente (Federelemente) 66 vorgesehen sein (siehe Figur 5), welche die Position der Messstreckeneinheit 24 gegenüber der Wandlereinheit 22 in vertikaler Richtung und insbesondere die Breite b des Spalts 36 zwischen der Wandlereinheit 22 und dem unteren Ende des Schallführungsrohrs 34 festlegen.

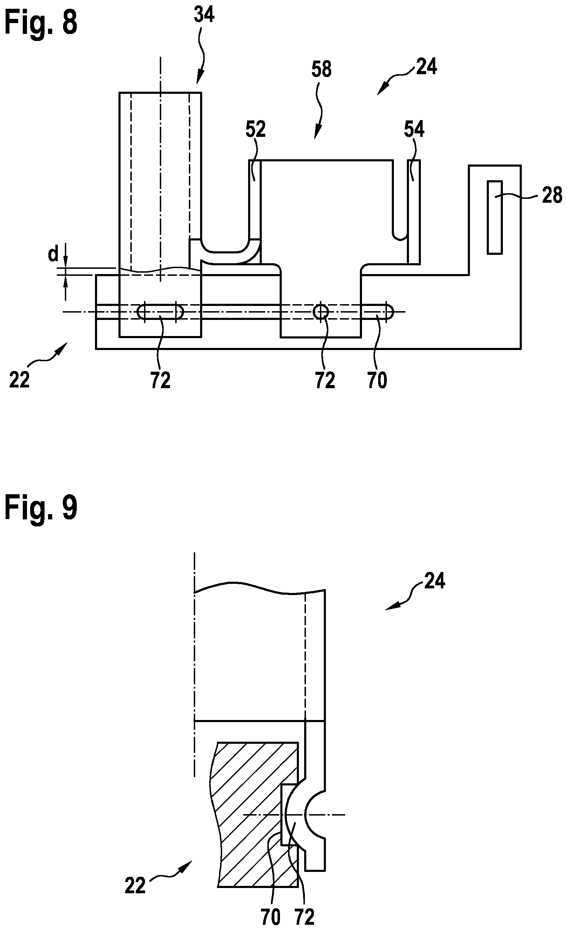

Die Messstreckeneinheit 24 kann auch in horizontaler Richtung verschiebbar an der Wandlereinheit 22 angebracht sein, wie in den Figuren 8 und 9 gezeigt. Dies ermöglicht es, dass Schallführungsrohr 34 stets exakt über dem Füllhöhen-Schallwandler 26 anzuordnen und mögliche Fertigungstoleranzen auszugleichen. Die Messstreckeneinheit 24 wird dann in der optimalen Position, z.B. durch Schweißen (siehe Figur 4), an der Wandlereinheit 22 fixiert.

Dazu können an wenigstens einer der beiden Einheiten 22, 24 eine oder mehrere Führungsnasen 72 ausgebildet sein, die in wenigstens eine korrespondierende Führungsnut 70 eingreifen, die in/an der anderen der beiden Einheiten 22, 24 ausgebildet ist.

Die Orientierung der Führungsnut 70, die insbesondere in horizontaler Richtung ausgerichtet ist, gibt die Richtung vor, in der die beiden Einheiten 22, 24 gegeneinander bewegbar sind.

In dem in den Figuren 7 und 9 gezeigten Ausführungsbeispiel sind die Führungsnasen 72 an der Messstreckeneinheit 24 und die Führungsnute(n) 70 in der Wandlereinheit 22 ausgebildet. Der Fachmann versteht jedoch, dass die Führungsnasen 72 auch an der Wandlereinheit 22 und die Führungsnute(n) 70 auch in der Messstreckeneinheit 24 ausgebildet sein können.

Nicht erfindungsgemäß kann die gezeigte Kombination der Füllhöhen-Schallmessstrecke mit einer Qualitäts-Schallmessstrecke 58 in einer Schallführungseinheit 20 optional werden, und kann eine nicht erfindungsgemäße Kombination eines Schallführungsrohrs 34 mit einem das Schallführungsrohr 34 wenigstens teilweise umgebenden Heizelement 40 auch ohne die Qualitäts-Schallmessstrecke 58 realisiert werden. Ebenso kann das vorteilhafte Beheizen der Qualitäts-Schallmessstrecke 58 durch die Abwärme einer in der Wandlereinheit 22 vorgesehenen Steuerschaltung 30 unabhängig von der Füllhöhen-Schallmessstrecke realisiert werden.

## Patentansprüche

1. Schallführungseinheit (20) für einen Tank (2), der zur Speicherung eines Fluids, insbesondere fluiden Reduktionsmittels, (6) vorgesehen ist, mit
einer Wandlereinheit (22) und einer Messstreckeneinheit (24);
einer Füllhöhen-Schallmessstrecke, die zur Messung der Füllhöhe (H) des Fluids (6) im Tank (2) ausgebildet ist, wobei die Füllhöhen-Schallmessstrecke ein im Wesentliches in vertikaler Richtung verlaufendes Schallführungsrohr (34) und einen an einem unteren Ende des Schallführungsrohrs (34) angeordneten Füllhöhen-Schallwandler (26) aufweist, wobei der Füllhöhen-Schallwandler (26) in oder an der Wandlereinheit (22) ausgebildet ist, und wobei das Schallführungsrohr (34) in oder an der Messstreckeneinheit (24) ausgebildet ist;
wobei die Schallführungseinheit (20) einen Heizkörper (40) aufweist, der an oder um wenigsten einen Bereich des Schallführungsrohrs (34) angeordnet ist;
wobei die Schallführungseinheit (20) zusätzlich eine Qualitäts-Schallmessstrecke (58) mit einem an der Qualitäts-Schallmessstrecke (58) angeordneten Qualitäts-Schallwandler (28) und einem an der Qualitäts-Schallmessstrecke (58) angeordneten Hauptreflektor (52) umfasst; und
wobei der Hauptreflektor (52) in horizontaler Richtung zwischen dem Qualitäts-Schallwandler (28) und dem Füllhöhen-Schallwandler (26) angeordnet ist, so dass das Fluid (6) in der Qualitäts-Schallmessstrecke (58) durch die Abwärme einer zwischen den beiden Schallwandlern (26, 28) in der Wandlereinheit (22) angeordnete Steuerschaltung (30) erwärmt wird.

2. Schallführungseinheit (20) nach Anspruch 1, wobei der Heizkörper (40) wenigstens eine Ausnehmung oder Vertiefung (46) aufweist und wobei der wenigstens eine Bereich des Schallführungsrohrs (34) in der wenigstens einen Ausnehmung (46) oder Vertiefung angeordnet ist.

3. Schallführungseinheit (20) nach Anspruch 1 oder 2, wobei das Schallführungsrohr (34) wenigstens teilweise aus Metall ausgebildet ist, und wobei in oder an dem Heizkörper (40) wenigstens ein Magnet (44) vorhanden ist, der es ermöglicht, das Schallführungsrohr (34) durch Magnetkraft an dem Heizkörper (40) zu fixieren.

4. Schallführungseinheit (20) nach einem der vorangehenden Ansprüche, wobei das Schallführungsrohr (34) einen Innendurchmesser (d₁) von 10 mm bis 18 mm, insbesondere einen Innendurchmesser (d₁) von 12 mm bis 16 mm, insbesondere einen Innendurchmesser (d₁) von 14 mm hat, oder wobei das Schallführungsrohr (34) einen Innendurchmesser (d₁) von weniger als 10 mm hat.

5. Schallführungseinheit (20) nach einem der vorangehenden Ansprüche, wobei sich die Qualitäts-Schallmessstrecke (58) im Wesentlichen orthogonal zum Schallführungsrohr (34) erstreckt.

6. Schallführungseinheit (20) nach Anspruch 5, wobei Schallführungseinheit (20) einen an der Qualitäts-Schallmessstrecke (58) angeordneten Referenzreflektor (54) umfasst, wobei der Referenzreflektor (54) insbesondere zwischen dem Qualitäts-Schallwandler (28) und dem Hauptreflektor (52) angeordnet ist.

7. Schallführungseinheit (20) nach einem der vorangehenden Ansprüche, wobei die Wandlereinheit (22) und die Messstreckeneinheit (24) so ausgebildet sind, dass sie durch eine horizontale Relativbewegung oder durch eine vertikale Relativbewegung miteinander verbindbar sind.

8. Schallführungseinheit (20) nach Anspruch 7, wobei wenigstens eine von der Wandlereinheit (22) und der Messstreckeneinheit (24) wenigstens ein Rastelement (62) aufweist, das es ermöglicht, die beiden Einheiten (22, 24) durch Einrasten des wenigstens einen Rastelements (62) mechanisch miteinander zu verbinden.

9. Schallführungseinheit (20) nach einem der vorangehenden Ansprüche, wobei wenigstens eine von der Wandlereinheit (22) und der Messstreckeneinheit (24) wenigstens eine Führungsnase (72) aufweist, und wobei die andere von der Wandlereinheit (22) und der Messstreckeneinheit (24) wenigstens eine Führungsnut (70) aufweist, die zur Aufnahme der wenigstens einen Führungsnase (72) ausgebildet ist.

10. Tank (2) zur Speicherung eines Fluids (6) mit einer Schallführungseinheit (20) nach einem der vorangehenden Ansprüche.

11. Abgasreduktionssystem mit einem Tank (2) zur Speicherung eines Fluids (6) nach Anspruch 10.

## Claims

1. Sound guidance unit (20) for a tank (2) which is provided for storing a fluid, in particular a fluid reducing agent (6), having
a transducer unit (22) and a measurement section unit (24);
a fill-height sound measurement section, which is configured for measuring the fill height (H) of the fluid (6) in the tank (2), wherein the fill-height sound measurement section has a sound guidance tube (34) extending substantially in a vertical direction and a fill-height sound transducer (26) arranged at a lower end of the sound guidance tube (34), wherein the fill-height sound transducer (26) is formed in or on the transducer unit (22), and wherein the sound guidance tube (34) is formed in or on the measurement section unit (24);
wherein the sound guidance unit (20) has a heating body (40) which is arranged on or around at least one region of the sound guidance tube (34);
wherein the sound guidance unit (20) additionally comprises a quality sound measurement section (58) with a quality sound transducer (28) arranged at the quality sound measurement section (58) and with a main reflector (52) arranged at the quality sound measurement section (58); and
wherein the main reflector (52) is arranged between the quality sound transducer (28) and the fill-height sound transducer (26) in a horizontal direction such that the fluid (6) in the quality sound measurement section (58) is heated by the waste heat of a control circuit (30), which is arranged in the transducer unit (22) between the two sound transducers (26, 28).

2. Sound guidance unit (20) according to Claim 1, wherein the heating body (40) has at least one recess or depression (46), and wherein the at least one region of the sound guidance tube (34) is arranged in the at least one recess (46) or depression.

3. Sound guidance unit (20) according to Claim 1 or 2, wherein the sound guidance tube (34) is formed at least partially from metal, and wherein at least one magnet (44) is present in or on the heating body (40), which magnet makes it possible for the sound guidance tube (34) to be fixed to the heating body (40) by way of magnetic force.

4. Sound guidance unit (20) according to one of the preceding claims, wherein the sound guidance tube (34) has an inner diameter (d₁) of 10 mm to 18 mm, in particular an inner diameter (d₁) of 12 mm to 16 mm, in particular an inner diameter (d₁) of 14 mm, or wherein the sound guidance tube (34) has an inner diameter (d₁) of less than 10 mm.

5. Sound guidance unit (20) according to one of the preceding claims, wherein the quality sound measurement section (58) extends substantially orthogonally to the sound guidance tube (34).

6. Sound guidance unit (20) according to Claim 5, wherein the sound guidance unit (20) comprises a reference reflector (54) which is arranged at the quality sound measurement section (58), wherein the reference reflector (54) is arranged in particular between the quality sound transducer (28) and the main reflector (52).

7. Sound guidance unit (20) according to one of the preceding claims, wherein the transducer unit (22) and the measurement section unit (24) are formed in such a way that they can be connected to one another by way of a horizontal relative movement or by way of a vertical relative movement.

8. Sound guidance unit (20) according to Claim 7, wherein at least one of the transducer unit (22) and measurement section unit (24) has at least one latching element (62) which allows the two units (22, 24) to be connected mechanically to one another by way of latching of the at least one latching element (62).

9. Sound guidance unit (20) according to one of the preceding claims, wherein at least one of the transducer unit (22) and measurement section unit (24) has at least one guide nose (72), and wherein the other one of the transducer unit (22) and measurement section unit (24) has at least one guide groove (70) which is configured for receiving the at least one guide nose (72).

10. Tank (2) for storing a fluid (6), having a sound guidance unit (20) according to one of the preceding claims.

11. Exhaust-gas reduction system having a tank (2) for storing a fluid (6) according to Claim 10.

## Revendications

1. Unité de guidage acoustique (20) pour un réservoir (2), qui est prévu pour le stockage d'un fluide, notamment d'un agent réducteur fluide (6), comprenant :
une unité de convertisseur (22) et une unité de section de mesure (24) ;
une section de mesure acoustique de hauteur de remplissage, qui est configurée pour mesurer la hauteur de remplissage (H) du fluide (6) dans le réservoir (2), la section de mesure acoustique de hauteur de remplissage présentant un tube de guidage acoustique (34) s'étendant essentiellement dans la direction verticale et un convertisseur acoustique de hauteur de remplissage (26) agencé à une extrémité inférieure du tube de guidage acoustique (34), dans laquelle le convertisseur acoustique de hauteur de remplissage (26) est formé dans ou sur l'unité de convertisseur (22), et dans laquelle le tube de guidage acoustique (34) est formé dans ou sur l'unité de section de mesure (24) ;
dans laquelle l'unité de guidage acoustique (20) présente un corps chauffant (40), qui est agencé sur ou autour d'au moins une zone du tube de guidage acoustique (34) ;
dans laquelle l'unité de guidage acoustique (20) comprend en outre une section de mesure acoustique de qualité (58) comprenant un convertisseur acoustique de qualité (28) agencé sur la section de mesure acoustique de qualité (58) et un réflecteur principal (52) agencé sur la section de mesure acoustique de qualité (58) ; et
dans laquelle le réflecteur principal (52) est agencé dans la direction horizontale entre le convertisseur acoustique de qualité (28) et le convertisseur acoustique de hauteur de remplissage (26), de telle sorte que le fluide (6) dans la section de mesure acoustique de qualité (58) est chauffé par la chaleur résiduaire d'un circuit de commande (30) agencé entre les deux convertisseurs acoustique (26, 28) dans l'unité de convertisseur (22).

2. Unité de guidage acoustique (20) selon la revendication 1, dans laquelle le corps chauffant (40) présente au moins un évidement ou un creux (46) et dans laquelle l'au moins une zone du tube de guidage acoustique (34) est agencée dans l'au moins un évidement (46) ou creux.

3. Unité de guidage acoustique (20) selon la revendication 1 ou 2, dans laquelle le tube de guidage acoustique (34) est formé au moins partiellement en métal, et dans laquelle au moins un aimant (44) est présent dans ou sur le corps chauffant (40), qui permet de fixer le tube de guidage acoustique (34) sur le corps chauffant (40) par force magnétique.

4. Unité de guidage acoustique (20) selon l'une quelconque des revendications précédentes, dans laquelle le tube de guidage acoustique (34) a un diamètre intérieur (d₁) de 10 mm à 18 mm, notamment un diamètre intérieur (d₁) de 12 mm à 16 mm, notamment un diamètre intérieur (d₁) de 14 mm, ou dans laquelle le tube de guidage acoustique (34) a un diamètre intérieur (d₁) de moins de 10 mm.

5. Unité de guidage acoustique (20) selon l'une quelconque des revendications précédentes, dans laquelle la section de mesure acoustique de qualité (58) s'étend essentiellement orthogonalement au tube de guidage acoustique (34).

6. Unité de guidage acoustique (20) selon la revendication 5, dans laquelle l'unité de guidage acoustique (20) comprend un réflecteur de référence (54) agencé sur la section de mesure acoustique de qualité (58), dans laquelle le réflecteur de référence (54) est notamment agencé entre le convertisseur acoustique de qualité (28) et le réflecteur principal (52).

7. Unité de guidage acoustique (20) selon l'une quelconque des revendications précédentes, dans laquelle l'unité de convertisseur (22) et l'unité de section de mesure (24) sont configurées de telle sorte qu'elles peuvent être reliées entre elles par un mouvement relatif horizontal ou par un mouvement relatif vertical.

8. Unité de guidage acoustique (20) selon la revendication 7, dans laquelle au moins une parmi l'unité de convertisseur (22) et l'unité de section de mesure (24) présente au moins un élément d'enclenchement (62), qui permet de relier mécaniquement les deux unités (22, 24) entre elles par enclenchement de l'au moins un élément d'enclenchement (62).

9. Unité de guidage acoustique (20) selon l'une quelconque des revendications précédentes, dans laquelle au moins une parmi l'unité de convertisseur (22) et l'unité de section de mesure (24) présente au moins un bec de guidage (72), et dans laquelle l'autre parmi l'unité de convertisseur (22) et l'unité de section de mesure (24) présente au moins une rainure de guidage (70), qui est configurée pour recevoir l'au moins un bec de guidage (72).

10. Réservoir (2) pour stocker un fluide (6), comprenant une unité de guidage acoustique (20) selon l'une quelconque des revendications précédentes.

11. Système de réduction de gaz d'échappement comprenant un réservoir (2) pour stocker un fluide (6) selon la revendication 10.
